(19) Europäisches Patentamt
European Patent Office
Office européen des brevets

(11) **EP 4 527 704 A1**

(12) **EUROPEAN PATENT APPLICATION**

(43) Date of publication:
**26.03.2025 Bulletin 2025/13**

(21) Application number: **24202517.9**

(22) Date of filing: **25.09.2024**

(51) International Patent Classification (IPC):
***B60T 13/74*** (2006.01)   ***F16D 55/226*** (2006.01)
***F16D 65/14*** (2006.01)   ***F16D 65/54*** (2006.01)

(52) Cooperative Patent Classification (CPC):
**B60T 13/74; B60T 13/741; F16D 55/226; F16D 65/14; F16D 65/54**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.09.2023  CN 202311244694**

(71) Applicant: **Huawei Digital Power Technologies Co., Ltd.**
**Shenzhen, Guangdong 518043 (CN)**

(72) Inventor: **HE, Yuhui**
**Shenzhen, 518043 (CN)**

(74) Representative: **Gill Jennings & Every LLP**
**The Broadgate Tower**
**20 Primrose Street**
**London EC2A 2ES (GB)**

(54) **ELECTRO-MECHANICAL BRAKING SYSTEM AND VEHICLE**

(57)    This application provides an electro-mechanical braking system and a vehicle. The electro-mechanical braking system includes a clamp body, where the clamp body includes two sliding blocks, a screw rod, and a gain bridge, one of the sliding blocks is configured to be movably connected to one friction plate and the gain bridge, the gain bridge is configured to drive the friction plate, the other sliding block is configured to be in transmission connection to the sliding block and the other friction plate through the screw rod, and the screw rod is configured to be in threaded connection to the other sliding block; and a driving apparatus, where the driving apparatus is configured to drive the gain bridge and the sliding block and is configured to drive, through a one-way torque limiting apparatus, the screw rod to rotate along an axis of the screw rod relative to the two sliding blocks In this application, the electro-mechanical braking system decouples a braking force gain and wear compensation through the one-way torque limiting apparatus. This improves reliability of the electro-mechanical braking system.

EP 4 527 704 A1

## Description

## TECHNICAL FIELD

This application relates to the field of vehicle technologies, and in particular, to an electro-mechanical braking system and a vehicle.

## BACKGROUND

In an electro-mechanical braking (electro-mechanical braking, EMB) system, a brake motor and a mechanical transmission mechanism are used together to drive a brake for braking. The electro-mechanical braking system features a simple structure, sensitive response, stable load transfer, no hydraulic pipeline disposed, and the like, and is with high transfer efficiency. The electro-mechanical braking system can improve safety, maneuverability, and comfort of a vehicle.

A braking force and a braking stroke output by the brake motor are relatively fixed. In some scenarios, the electro-mechanical braking system may be stuck or worn out inside. Therefore, a gain mechanism may be disposed in the electro-mechanical braking system to adjust the braking force, and a wear compensation mechanism may be disposed to adjust the braking stroke. The gain mechanism and the wear compensation mechanism may be stacked together, resulting in a complex internal structure of the electro-mechanical braking system and energy flow crossing. This is not conducive to precision control of the electro-mechanical braking system, and increases manufacturing costs of the electro-mechanical braking system.

## SUMMARY

This application provides an electro-mechanical braking system and a vehicle, to decouple a braking force gain and wear compensation through a one-way torque limiting apparatus. This improves reliability of the electro-mechanical braking system. This application specifically includes the following solutions:

According to a first aspect, this application provides an electro-mechanical braking system. The electro-mechanical braking system includes a clamp body, where the clamp body includes two sliding blocks, a screw rod, and a gain bridge, one of the sliding blocks is configured to be movably connected to one friction plate and the gain bridge, the gain bridge is configured to drive the friction plate, the other sliding block is configured to be in transmission connection to the sliding block and the other friction plate through the screw rod, and the screw rod is configured to be in threaded connection to the other sliding block; and a driving apparatus, where the driving apparatus is configured to drive the gain bridge and the sliding block and is configured to drive, through a one-way torque limiting apparatus, the screw rod to rotate along an axis of the screw rod relative to the two sliding blocks.

In this application, the electro-mechanical braking system separately drives the two sliding blocks to move through the driving apparatus, to drive the two friction plates to slide relative to each other to implement braking. The gain bridge is disposed between the sliding block and the friction plate, and the gain bridge is configured to increase a braking force in a braking process. The screw rod is disposed between the two sliding blocks, and the driving apparatus may further adjust a distance between the two friction plates by driving the screw rod to rotate, to implement wear compensation. A braking force gain and wear compensation are decoupled through the one-way torque limiting apparatus, so that in this application, the electro-mechanical braking system is of a simple structure and with high reliability, and can adapt to more working scenarios, to ensure that the electro-mechanical braking system effectively provides the braking force.

In an implementation, the driving apparatus includes a cam, the cam is configured to abut against and be arranged between the gain bridge and the sliding block, and the cam is configured to be in transmission connection to the screw rod through the one-way torque limiting apparatus.

In this implementation, the driving apparatus drives the gain bridge and the sliding block through the cam, to implement a braking function of the electro-mechanical braking system and provide the braking force gain; and the cam further drives the screw rod through the one-way torque limiting apparatus, to drive the screw rod to rotate to implement the wear compensation after wear occurs.

In an implementation, the one-way torque limiting apparatus includes a one-way clutch and a torque limiter, and the driving apparatus is configured to be in transmission connection to the screw rod sequentially through the torque limiter and the one-way clutch, where

the torque limiter is configured to rotate forward or backward along an axis of the torque limiter; and the one-way clutch is configured to drive the screw rod to rotate forward with the torque limiter and is configured to limit the screw rod from rotating backward with the torque limiter. In this implementation, the torque limiter may rotate with the cam and transmit or slip with a torque change of the cam, and the one-way clutch may synchronously rotate with the cam and drive the screw rod to unidirectionally rotate. By using dynamic characteristics of the one-way torque limiting apparatus, the screw rod can unidirectionally rotate relative to the other sliding block to reduce a relative spacing between the two sliding blocks after the electro-mechanical braking system is worn out, thereby implementing the wear compensation function.

In an implementation, the torque limiter includes a driving part and a driven part that are coaxially transmitted, the driven part is coaxially fastened to the one-way clutch, and the driving part is coaxially transmitted with the cam, where

along an axial direction of the cam, a convex strip and a groove that cooperate with each other are provided between the driving part and the cam, and the convex strip is embedded in the groove to implement coaxial transmission between the cam and the driving part.

In this implementation, the convex strip is disposed on the driving part of the torque limiter and is embedded in the groove of the cam, or the convex strip is disposed on the cam and is embedded in the groove of the driving part of the torque limiter, so that effect that the cam drives the driving part of the torque limiter to coaxially rotate can be achieved.

In an implementation, along a circumferential direction of the cam, a width dimension of the groove is greater than a width dimension of the convex strip; and after the cam rotates by a preset angle relative to the driving part, the convex strip and the groove are in contact with each other and coaxially rotate, where

a ratio of the preset angle $\theta_0$ at which the cam rotates relative to the driving part to a maximum rotation angle $\theta_{max}$ of the cam in a braking process meets the following condition:

$$1:25 \leq \theta_0 : \theta_{max} \leq 1:5$$

In this implementation, a gap is provided between the convex strip and the groove, so that the cam can first push the two friction plates to slide relative to a preset distance, and then drive the screw rod to rotate to implement the wear compensation. When the two friction plates slide relative to the preset distance and are not in contact with a brake disc, it is determined that the friction plates are worn out, and the screw rod needs to be driven to rotate to perform wear compensation.

In an implementation, the torque limiter is a double-ratchet type torque limiter, a ball-ratchet type torque limiter, or a friction torque limiter.

In an implementation, the one-way clutch is a ratchet-pawl clutch or an overrunning clutch.

In an implementation, the electro-mechanical braking system includes two screw rods, the two screw rods are arranged at an interval along radial directions of the two screw rods, and are located on two sides of the gain bridge, and the driving apparatus drives the two screw rods to synchronously rotate through the one-way torque limiting apparatus.

In this implementation, the two screw rods are arranged on the two sides of the gain bridge, so that the two sliding blocks smoothly slide, and it is ensured that mechanism actions between the braking force gain and the wear compensation do not interfere with each other.

In an implementation, a rotation axis of the cam intersects an axial direction of the screw rod, and the driving apparatus includes a reversing gear assembly, a belt pulley, and a transmission belt, where

an input gear of the reversing gear assembly is coaxially transmitted with the torque limiter; and
an axis of an output gear of the reversing gear assembly is parallel to the axial direction of the screw rod, the output gear of the reversing gear assembly is coaxially transmitted with the belt pulley, and the belt pulley drives, through the transmission belt, the two screw rods to synchronously rotate.

In this implementation, the reversing gear assembly, the belt pulley, and the transmission belt are in transmission connection between the one-way clutch and the screw rod. The reversing gear assembly is configured to implement reversing of rotation motion, so that a rotation axis of the belt pulley is parallel to the axial direction of the screw rod. The transmission belt can synchronously transfer a rotation action of the belt pulley to the two screw rods, to ensure that the two screw rods synchronously rotate.

In an implementation, the sliding block is provided with an accommodating cavity, the accommodating cavity is located between the two screw rods and is configured to accommodate at least the reversing gear assembly, and the sliding block further includes a cover plate for shielding an opening of the accommodating cavity, where

along an axial direction of the output gear of the reversing gear assembly, the cover plate is located on a side that is of the output gear of the reversing gear assembly and that is away from the belt pulley; and
a gear shaft of the output gear of the reversing gear assembly includes an extension section, the extension section extends toward the cover plate, and a cross-sectional shape of the extension section is a hexagon.

In this implementation, the reversing gear assembly may be accommodated in the sliding block to form sealing protection. The extension section of the output gear of the reversing gear assembly is disposed toward the cover plate. This facilitates manual adjustment of the gap between the two friction plates, and facilitates assembly and maintenance of the electro-mechanical braking system.

In an implementation, the sliding block is provided with an accommodating groove, the cam and the gain bridge are located in the accommodating groove, the cam and the friction plate are respectively arranged on the two sides of the gain bridge along the axial direction of the screw rod, and the cam is configured to rotate and abut against the gain bridge and slide in the accommodating groove to push the friction plate.

In this implementation, the cam drives, through the gain bridge, the friction plate to slide, and the cam further drives the gain bridge to slide in the sliding block, to drive the other sliding block to drive the other friction plate to slide, thereby forming effect that the two friction plates slide relative to each other to brake the brake disc.

In an implementation, along the axial direction of the screw rod, the gain bridge includes a fastener, a roller, and a displacement part that are sequentially arranged, the fastener is configured to abut against the cam, the displacement part is fastened to the friction plate, and the roller is located between the fastener and the displacement part, where

along the radial direction of the screw rod, the friction plate may be displaced relative to the sliding block in the braking process, the displacement part is synchronously displaced with the friction plate and reduce a distance between the displacement part and the fastener, and the roller abuts between the fastener and the displacement part to increase a braking force.

In this implementation, the friction plate that is in transmission connection to the gain bridge is further slidably connected to the sliding block along the radial direction of the screw rod, and the friction plate is displaced relative to the sliding block in the braking process by a circumferential force for rotation of the brake disc, and drives the displacement part to displace relative to the fastener to reduce the distance between the displacement part and the fastener. The roller is squeezed by the fastener and the displacement part to generate a reverse thrust, to increase pressure between the two friction plates and the brake disc to implement the gain compensation of the braking force.

In an implementation, along the radial direction of the screw rod, a length dimension of the displacement part is less than a length dimension of the accommodating groove.

In this implementation, the gain bridge is partially accommodated in the accommodating groove provided on the sliding block, and abuts against the sliding block in a motion process to synchronously move. The displacement part extends out of the accommodating groove to be connected to the friction plate. The accommodating groove controls a displacement distance of the friction plate relative to the sliding block by limiting a displacement distance of the displacement part.

In an implementation, the fastener is provided with a first V-shaped notch toward the displacement part, the displacement part is provided with a second V-shaped notch toward the fastener, and the first V-shaped notch is aligned with the second V-shaped notch along the axial direction of the screw rod; and when the displacement part is synchronously displaced with the friction plate, the displacement part drives the first V-shaped notch to offset relative to the second V-shaped notch to reduce the distance between the displacement part and the fastener.

In this implementation, the V-shaped notches that are provided on the fastener and the displacement part and that are opposite to each other may implement positioning of the roller, and the two V-shaped notches cooperate to form two groups of slopes, so that the displacement part is allowed to squeeze the roller by sliding on both left and right sides of the fastener, to implement effect of the braking force gain. The electromechanical braking system in this application is applicable to both a left wheel and a right wheel of the vehicle.

In an implementation, the fastener is provided with at least two first V-shaped notches, and the at least two first V-shaped notches are arranged at an interval along the radial direction of the screw rod;

the displacement part is provided with second V-shaped notches with a same quantity as the first V-shaped notches, and each second V-shaped notch is aligned with one of the first V-shaped notches along the axial direction of the screw rod; and
one roller is disposed between the first V-shaped notch and the second V-shaped notch that are aligned with each other.

In this implementation, a plurality of groups including first V-shaped notches, second V-shaped notches, and rollers are arranged at an interval along a displacement direction of the displacement part, and pressure transferred by the braking force gain mechanism to the friction plate is more uniform, so that effect of the braking force gain can be improved.

In an implementation, the roller is cylindrical, and an axis of the roller is perpendicular to the axial direction of the screw rod, and is also perpendicular to a displacement direction of the friction plate relative to the sliding block in the braking process.

In this implementation, the roller is disposed to be cylindrical, and the axis of the roller is parallel to a length direction of the V-shaped notch, so that a contact area between the roller and the displacement part and a contact area between the roller and the fastener can be increased, the roller better abuts between the displacement part and the fastener, and more uniform braking force gain pressure is provided for the friction plate.

In an implementation, the driving apparatus includes a brake motor and a transmission mechanism, and the brake motor is fastened to the sliding block and drives, through the transmission mechanism, the cam to rotate, where

along the axial direction of the screw rod, the brake motor is located on one side that is of the sliding block and that is away from the friction plate, and a motor shaft of the brake motor is perpendicular to the axial direction of the screw rod; and
an input part of the transmission mechanism is in transmission connection to the brake motor, and slides along the axial direction of the screw rod, and two opposite ends of an output part of the transmission mechanism are respectively rotatably connected to the input part of the transmission mechanism and the cam.

In this implementation, the brake motor is configured to provide the braking force, and an arrangement manner of the brake motor can reduce an outline dimension of the electro-mechanical braking system along the axial direction of the screw rod. This saves wheel end space. The transmission mechanism is configured to transfer a driving force provided by the brake motor to the cam to drive the cam to rotate.

According to a second aspect, this application provides a vehicle. The vehicle includes a wheel and the electro-mechanical braking system provided in any one of the foregoing implementations, where an axial direction of a screw rod in the electro-mechanical braking system is approximately parallel to a brake disc rotation shaft of the wheel.

The vehicle provided in the second aspect of this application is braked through the electro-mechanical braking system provided in the first aspect of this application. Because in the electro-mechanical braking system provided in the first aspect of this application, the braking force gain mechanism and the wear compensation mechanism are respectively coupled to the two friction plates to implement energy distribution, so that reliability in the braking process of the vehicle in this application can be improved.

## BRIEF DESCRIPTION OF DRAWINGS

FIG. 1 is a diagram of a working scenario of an electro-mechanical braking system in a vehicle according to an embodiment of this application;
FIG. 2 is a diagram of an outline structure of an electro-mechanical braking system according to an embodiment of this application;
FIG. 3 is a diagram of a decomposed structure of an electro-mechanical braking system according to an embodiment of this application;
FIG. 4 is a diagram of a cooperation structure of two sliding blocks in an electro-mechanical braking system according to an embodiment of this application;
FIG. 5 is a diagram of a cooperation structure of a first friction plate in an electro-mechanical braking system according to an embodiment of this application;
FIG. 6 is a diagram of a decomposed structure of a gain bridge in an electro-mechanical braking system according to an embodiment of this application;
FIG. 7 is a diagram of a working principle of a gain bridge in an electro-mechanical braking system according to an embodiment of this application;
FIG. 8 is a diagram of a cross-sectional structure of a gain bridge in an electro-mechanical braking system according to an embodiment of this application;
FIG. 9 is a diagram of a structure of a torque limiter being a ball-ratchet type torque limiter in an electro-mechanical braking system according to an embodiment of this application;
FIG. 10 is a diagram of a partial structure of an electro-mechanical braking system upon starting of braking according to an embodiment of this application;
FIG. 11 is a diagram of a partial structure of an electro-mechanical braking system in a braking process according to an embodiment of this application;
FIG. 12 is a diagram of a structure of a torque limiter being a friction torque limiter in an electro-mechanical braking system according to an embodiment of this application;
FIG. 13 is a diagram of a structure of a torque limiter being a double-ratchet type torque limiter in an electro-mechanical braking system according to an embodiment of this application;
FIG. 14 is a diagram of a structure of another cooperation state of a double-ratchet type torque limiter in an electro-mechanical braking system according to an embodiment of this application;
FIG. 15 is a diagram of a structure of a one-way clutch included in an electro-mechanical braking system according to an embodiment of this application;
FIG. 16 is a diagram of a structure of a one-way clutch being an overrunning clutch in an electro-mechanical braking system according to an embodiment of this application;
FIG. 17 is a diagram of an outline structure of a cam in an electro-mechanical braking system according to an embodiment of this application;
FIG. 18 is a diagram of a decomposed structure of a cam that is in transmission connection to a screw rod in an electro-mechanical braking system according to an embodiment of this application;
FIG. 19 is a diagram of a partial cross-sectional structure of a position of an accommodating cavity in an electro-mechanical braking system according to an embodiment of this application;
FIG. 20 is a diagram of a partial structure of an electro-mechanical braking system upon starting of braking according to an embodiment of this application;
FIG. 21 is a diagram of a partial structure of an electro-mechanical braking system in a braking process according to an embodiment of this application; and
FIG. 22 is a diagram of a transmission path in an electro-mechanical braking system according to an embodiment of this application.

## DESCRIPTION OF EMBODIMENTS

The following describes technical solutions in embodiments of this application with reference to accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

In this specification, the sequence numbers, such as "first" and "second", of components are merely intended to distinguish between the described objects, and do not have any sequential or technical meaning. Unless otherwise specified, the "connection" in this application includes a direct connection and an indirect connection. In descriptions of this application, it should be understood that orientation or position relationships indicated by the terms "above", "below", "front", "back", "top", "bottom", "inside", "outside", and the like are based on orientation or position relationships shown in the accompanying drawings, and are merely intended for ease of describing this application and simplifying descriptions, rather than indicating or implying that a described apparatus or element needs to have a specific orientation or needs to be constructed and operated in a specific orientation. Therefore, such terms shall not be understood as a limitation on this application.

In this application, unless otherwise specified and limited, when a first feature is "above" or "below" a second feature, the first feature may be in direct contact with the second feature, or the first feature may be in indirect contact with the second feature through an intermediate medium. In addition, that the first feature is "above" or "over" the second feature may be that the first feature is right above or obliquely above the second feature, or merely means that a horizontal height of the first feature is greater than that of the second feature. That the first feature is "below" or "under" the second feature may be that the first feature is right below or obliquely below the second feature, or merely means that a horizontal height of the first feature is less than that of the second feature.

This application provides an electro-mechanical braking system. The electro-mechanical braking system includes a clamp body, where the clamp body includes two sliding blocks, a screw rod, and a gain bridge, one of the sliding blocks is configured to be movably connected to one friction plate and the gain bridge, the gain bridge is configured to drive the friction plate, the other sliding block is configured to be in transmission connection to the sliding block and the other friction plate through the screw rod, and the screw rod is configured to be in threaded connection to the other sliding block; and a driving apparatus, where the driving apparatus is configured to drive the gain bridge and the sliding block and is configured to drive, through a one-way torque limiting apparatus, the screw rod to rotate along an axis of the screw rod relative to the two sliding blocks.

In the electro-mechanical braking system in this application, a braking force gain and wear compensation are decoupled through the one-way torque limiting apparatus, so that the electro-mechanical braking system is of a simple structure and with high reliability, and can adapt to more working scenarios, to ensure that the electro-mechanical braking system effectively provides a braking force.

This application provides a vehicle. The vehicle includes a wheel and the foregoing electro-mechanical braking system, where an axial direction of a screw rod in the electro-mechanical braking system is approximately parallel to a brake disc rotation shaft of the wheel. In this way, braking reliability of the vehicle in this application is high.

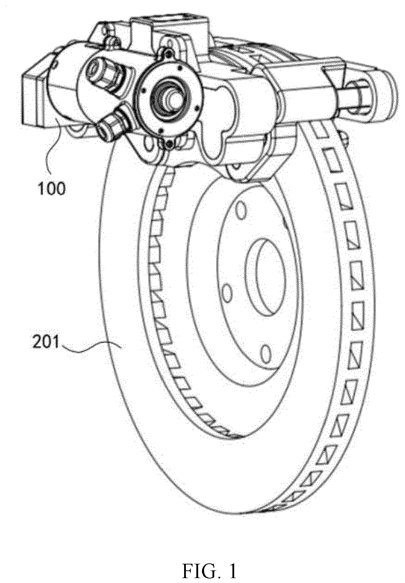

FIG. 1 is a diagram of a working scenario of an electro-mechanical braking system 100 in a vehicle according to this application.

As shown in FIG. 1, the electro-mechanical braking system 100 provided in this application is disposed at a wheel of the vehicle, and is specifically disposed on a brake disc 201 corresponding to the wheel. The electro-mechanical braking system 100 includes a clamp holder 105 and a braking assembly. The clamp holder 105 is fastened to a frame of the vehicle and is close to the brake disc 201. In a traveling process of the vehicle, the brake disc 201 rotates with the wheel, and the clamp holder 105 is fastened relative to the frame, to form effect that the brake disc 201 rotates relative to the clamp holder 105.

The braking assembly is connected to the clamp holder 105, and the braking assembly may slide relative to the clamp holder 105 (namely, the frame) through an action of an internal mechanism. In addition, a sliding direction that is of the internal mechanism of the braking assembly and that is relative to the clamp holder 105 is parallel to an axial direction of the brake disc 201. The braking assembly is in contact with the brake disc 201 by sliding relative to the clamp holder 105 through the action of the internal mechanism, to form a friction force, and further implement a braking action by braking the brake disc 201.

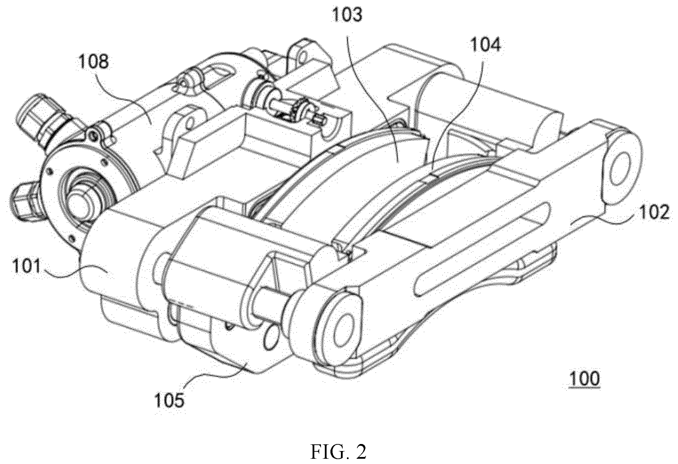

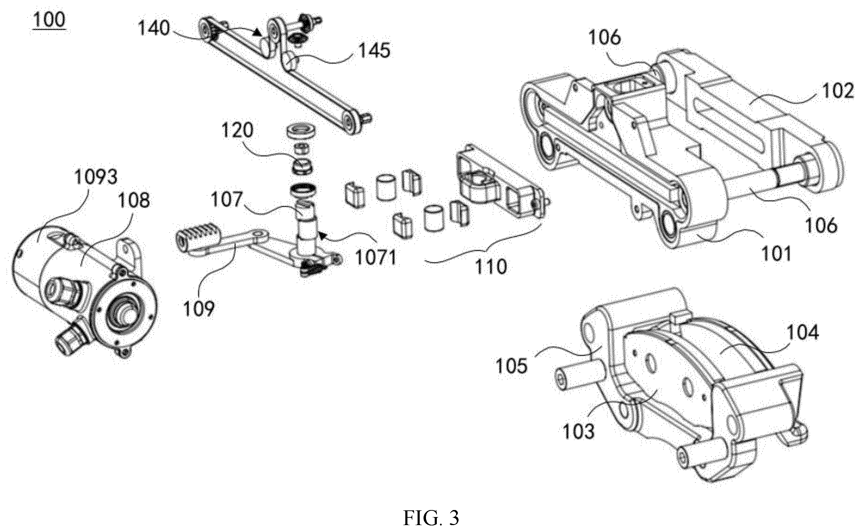

FIG. 2 is a diagram of an outline structure of the electro-mechanical braking system 100 according to this application, and FIG. 3 is a diagram of a decomposed structure of the electro-mechanical braking system 100.

As shown in FIG. 2 and FIG. 3, the braking assembly in the electro-mechanical braking system 100 in this application includes a clamp body, and the clamp body includes two sliding blocks (which are defined as a first sliding block 101 and a second sliding block 102 in this embodiment) and two friction plates (which are defined as a first friction plate 103 and a second friction plate 104 in this embodiment). One of the sliding blocks (which is defined as the first sliding block 101 in this embodiment) is configured to be movably connected to one of the friction plates (which is defined as the first friction plate 103 in this embodiment) and a gain bridge 110, and the gain bridge 110 is configured to drive the first friction plate 103. The other sliding block (which is defined as the second sliding block 102 in this embodiment) is configured to be in transmission connection to the first sliding block 101 and the other friction plate (which is defined as the second friction plate 104 in this embodiment) through a screw rod 106, and the screw rod 106 is configured to be in threaded connection to the second sliding block 102.

The first sliding block 101 and the second sliding block 102 are arranged at an interval, and an arrangement direction of the first sliding block 101 and the second sliding block 102 is parallel to a rotation axis of the brake disc 201. The first sliding block 101 and the second sliding block 102 are respectively arranged on two sides of the brake disc 201 along a direction of the rotation axis of the brake disc 201. The first sliding block 101 is fastened to the clamp holder 105, and the second sliding block 102 is slidably connected to the first sliding block 101 and may slide toward the first sliding block 101.

The first friction plate 103 is in transmission connection to the first sliding block 101 through the gain bridge 110, and the first friction plate 103 is located between the first sliding block 101 and the brake disc 201. The second friction plate 104 is in transmission connection to the second sliding block 102, and the second friction plate 104 is located between the second sliding block 102 and the brake disc 201. That is, the first friction plate 103 and the second friction plate 104 are also respectively arranged on the two sides of the brake disc 201 along the direction of the rotation axis of the brake disc 201. The first friction plate 103 may slide relative to the first sliding block 101 and be close toward the brake disc 201, and the second friction plate 104 is close toward the brake disc 201 with sliding of the second sliding block 102.

For the electro-mechanical braking system 100 in this application, the braking assembly drives the first friction plate 103 to slide relative to the first sliding block 101, and drives the second sliding block 102 to slide toward the first sliding block 101, so that the first friction plate 103 and the second friction plate 104 are close to each other and are in contact with the brake disc 201. The two friction plates respectively form friction forces on the two sides of the brake disc 201, to brake the brake disc 201.

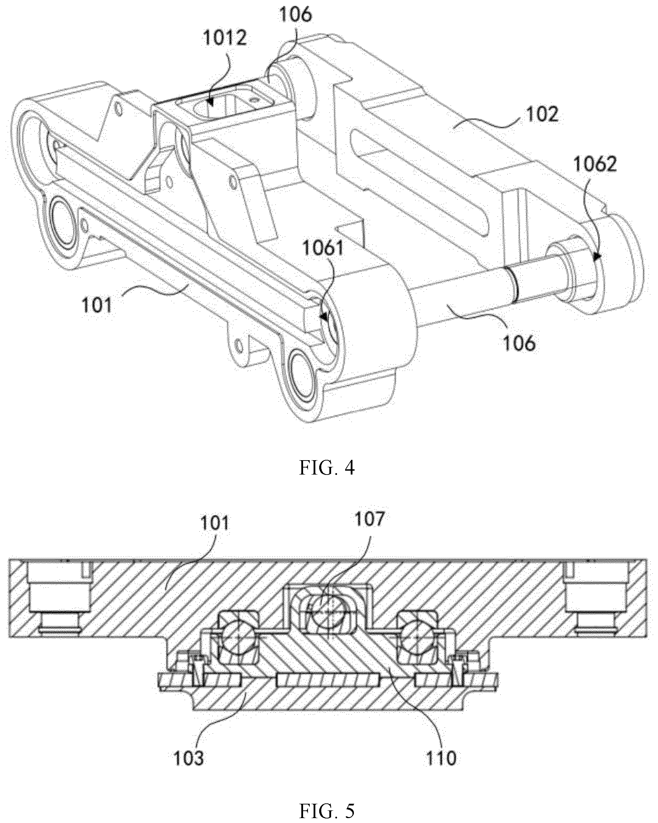

Specifically, FIG. 4 is a diagram of a cooperation structure of the two sliding blocks.

The screw rod 106 is further disposed between the first sliding block 101 and the second sliding block 102. The screw rod 106 includes a rotating end 1061 and a thread end 1062 that are opposite to each other along an axial direction of the screw rod 106. The first sliding block 101 and the second sliding block 102 are respectively provided with accommodating holes for cooperating with the screw rod 106. The accommodating hole of the first sliding block 101 is a blind hole, the rotating end 1061 of the screw rod 106 extends into the accommodating hole of the first sliding block 101, and the screw rod 106 is fastened to the first sliding block 101. The accommodating hole of the second sliding block 102 is a threaded hole, the thread end 1062 of the screw rod 106 extends into the accommodating hole of the second sliding block 102, and the screw rod 106 is in threaded connection to the second sliding block 102.

The electro-mechanical braking system 100 in this application includes a driving apparatus. The driving apparatus is configured to drive the gain bridge 110 and the first sliding block 101, and the driving apparatus is further configured to drive, through a one-way torque limiting apparatus, the screw rod 106 to rotate along the axial direction of the screw rod 106 relative to the two sliding blocks.

It may be understood that, when the screw rod 106 rotates relative to the first sliding block 101 and the second sliding block 102, along the axial direction of the screw rod 106, positions of the screw rod 106 and the first sliding block 101 may remain relatively unchanged, and the thread end 1062 of the screw rod 106 rotates relative to the accommodating hole of the second sliding block 102, and generates displacement. In this way, a distance between the first sliding block 101 and the second sliding block 102 is changed.

For example, when the screw rod 106 rotates forward, the thread end 1062 of the screw rod 106 extends toward the accommodating hole of the second sliding block 102, and reduces the distance between the first sliding block 101 and the second sliding block 102. When the screw rod 106 rotates backward, the thread end 1062 of the screw rod 106 exits toward the accommodating hole of the second sliding block 102, and increases the distance between the first sliding block 101 and the second sliding block 102. In some other embodiments, a thread rotation direction of the thread end 1062 of the screw rod 106 may alternatively be disposed reversely, so that the distance between the first sliding block 101 and the second sliding block 102 is increased when the screw rod 106 rotates forward, and the distance between the first sliding block 101 and the second sliding block 102 is reduced when the screw rod 106 rotates backward.

It should be pointed out that, in some embodiments, the accommodating hole that is of the first sliding block 101 and that is for accommodating the screw rod 106 may alternatively be a through hole, and the accommodating hole of the first sliding block 101 and the rotating end 1061 of the screw rod 106 are fastened along an axial dimension of the screw rod 106. A specific fastening manner may include a structure such as a slot, so that the foregoing effect that the distance between the first sliding block 101 and the second sliding block 102 is changed by driving the screw rod 106 to rotate may also be implemented.

FIG. 5 is a diagram of a cooperation structure of the first friction plate 103 at the first sliding block 101.

In an embodiment, the driving apparatus includes a cam 107. The cam 107 is configured to abut against and be arranged between the gain bridge 110 and the first sliding block 101, and the cam 107 is configured to be in transmission connection to the screw rod 106 through the one-way torque limiting apparatus. Specifically, the cam 107 is rotatably connected to the first sliding block 101, and the gain bridge 110 is in transmission connection between the first sliding block 101 and the first friction plate 103. The cam 107 may rotate relative to the first sliding block 101 and push the gain bridge 110 and the first friction plate 103 to slide relative to the first sliding block 101. That is, the first sliding block 101 is in transmission connection to the first friction plate 103 through the cam 107 and the gain bridge 110.

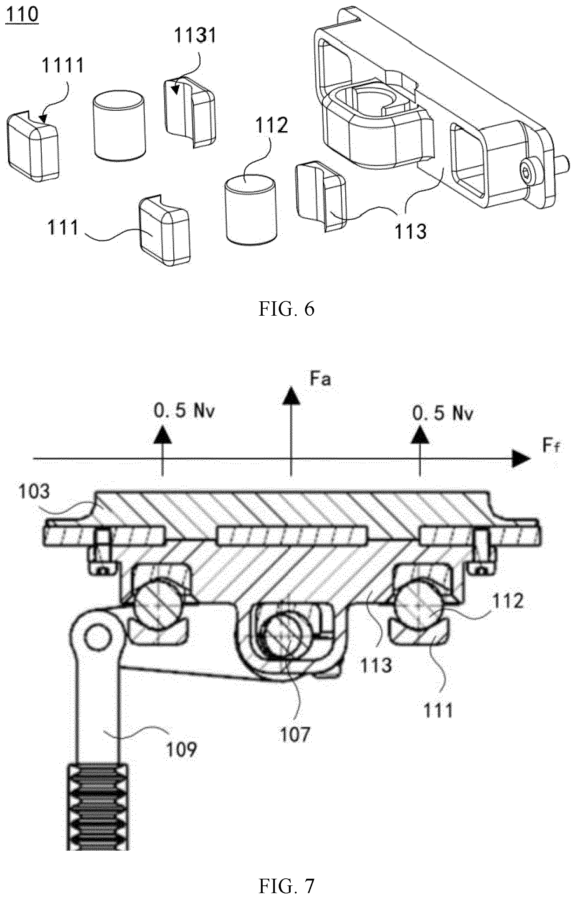

The gain bridge 110 abuts between the cam 107 and the first friction plate 103, and is configured to increase a braking force of the electro-mechanical braking system 100. Specifically, refer to FIG. 6 together.

In an embodiment, the gain bridge 110 includes a fastener 111, a roller 112, and a displacement part 113. The fastener 111, the roller 112, and the displacement part 113 are sequentially arranged along the axial direction of the screw rod 106. The fastener 111 is configured to abut against the cam 107, the displacement part 113 is fastened to the first friction plate 103, and the roller 112 is located between the fastener 111 and the displacement part 113.

An eccentric part 1071 of the cam 107 is in contact with and abuts against the fastener 111. When the cam 107 rotates relative to the first sliding block 101, the eccentric part 1071 abuts against the fastener 111 and slides toward the brake disc 201. The fastener 111 drives the gain bridge 110 to slide toward the brake disc 201 as a whole, and pushes the first friction plate 103 to synchronously slide toward the brake disc 201. The first friction plate 103 is in contact with an end surface of the brake disc 201, to form the friction force to brake the brake disc 201.

Further, based on a structure of the gain bridge 110, along the axial direction of the screw rod 106, the first friction plate 103 may be displaced relative to the first sliding block 101 in a braking process. After the first friction plate 103 is in contact with the brake disc 201, a circumferential force for rotation of the brake disc 201 reversely acts on the first friction plate 103, and drives the first friction plate 103 to displace along a tangential direction (a radial direction of the screw rod 106) of the brake disc 201. The first friction plate 103 is fastened to the displacement part 113, the first friction plate 103 drives the displacement part 113 to synchronously displace, and the displacement part 113 is displaced relative to the fastener 111 along a direction perpendicular to an arrangement direction of the two sliding blocks (the radial direction of the screw rod 106).

Slopes that cooperate with each other are provided between the displacement part 113 and the fastener 111. In a process in which the displacement part 113 is displaced relative to the fastener 111, the two slopes that cooperate with each other also move relative to each other, and a distance between the displacement part 113 and the fastener 111 along the axial direction of the screw rod 106 is reduced. The roller 112 is located between the two slopes that cooperate with each other, so that the roller 112 separately forms abutting pressure on the fastener 111 and the displacement part 113 because the distance between the fastener 111 and the displacement part 113 is reduced, and further separately abuts against the fastener 111 and the displacement part 113 to move in a direction toward the first sliding block 101 and the first friction plate 103 .

Because the cam 107 is rotatably connected to the first sliding block 101, and the cam 107 abuts against the fastener 111, the abutting force generated by the roller 112 acts on the first friction plate 103 through the displacement part 113, and this further increases contact pressure between the first friction plate 103 and the brake disc 201, and achieves effect of increasing a friction force between the first friction plate 103 and the brake disc 201. It may be understood that the friction force between the first friction plate 103 and the brake disc 201 is the braking force of the electro-mechanical braking system 100, that is, the structure of the gain bridge 110 may increase the braking force of the electro-mechanical braking system 100.

It should be noted that power of the gain bridge 110 is from the friction force between the brake disc 201 and the first friction plate 103. That is, when the gain bridge 110 implements a braking force gain, the brake disc 201 has been in contact with the first friction plate 103. Inside the gain bridge 110, the fastener 111, the roller 112, and the displacement part 113 also maintain a state of being in contact with each other. In some scenarios, a displacement amount of the displacement part 113 relative to the fastener 111 may be small, or there is only a displacement trend. The first friction plate 103 is subject to the friction force of the brake disc 201 to form a pulling force to drive the displacement part 113 to displace, and the pulling force is transferred by the gain bridge 110 by using a force of the internal mechanism, to form an abutting force and increase the friction force between the first friction plate 103 and the brake disc 201. It may also be explained as that, after the gain bridge 110 is subject to the pulling force of the first friction plate 103, no relative displacement may be generated inside the gain bridge 110, and a thrust on the first friction plate 103 may also be formed only by increasing mutual pressure between components, to implement effect of the braking force gain.

FIG. 7 is a diagram of a working principle of the gain bridge 110. In the diagram of FIG. 7, if a total braking force of the electro-mechanical braking system 100 is defined as N, the braking force gain provided by the gain bridge 110 is defined as Nv, included angles between a horizontal direction and the slopes between the fastener 111 and the displacement part 113 are defined as Y, and a coefficient of friction between the first friction plate 103 and the brake disc 201 is defined as $\mu$, a ratio K of the braking force gain of the gain bridge 110 may be calculated as follows:

$$K = \frac{N}{F_a} = \frac{tan\gamma}{tan\gamma - \mu},$$

where

$$N = N_v + F_a;$$

and

$$F_f = \mu * N$$

It may be understood that $F_a$ is an original braking force of the electro-mechanical braking system 100, and $F_f$ is the friction force of the electro-mechanical braking system 100 acting on the brake disc 201. The figure includes a structure of two groups each of which includes a fastener 111, a roller 112, and a displacement part 113 . A braking force gain provided by a single group of which includes a fastener 111, a roller 112, and a displacement part 113 is 0.5 Nv.

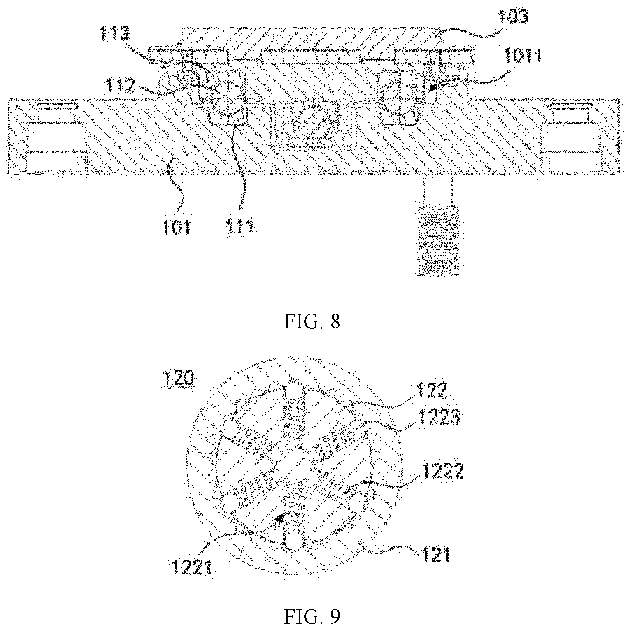

In an embodiment, the first sliding block 101 is provided with an accommodating groove 1011. The cam 107 and the gain bridge 110 are located in the accommodating groove 1011. The gain bridge 110 is partially accommodated in the accommodating groove 1011. Specifically, refer to the diagram of FIG. 8 together. The fastener 111 and the roller 112 of the gain bridge 110 are accommodated in the accommodating groove 1011, and the displacement part 113 is partially accommodated in the accommodating groove 1011. The other part of the displacement part 113 is located outside the accommodating groove 1011, and is fastened to the first friction plate 103.

In a direction in which the displacement part 113 is synchronously displaced with the first friction plate 103 (that is, in a direction perpendicular to an arrangement direction of the two sliding blocks), a length dimension of the displacement part 113 is less than a length dimension of the accommodating groove 1011. In this way, the accommodating groove 1011 may partially accommodate the gain bridge 110, and simultaneously the gain bridge 110 is allowed to be displaced with the first friction plate 103 relative to the first sliding block 101, to increase the braking force of the electro-mechanical braking system 100. On the contrary, the accommodating groove 1011 may also be configured to limit a displacement distance of the displacement part 113, to limit the first friction plate 103, and avoid an excessive displacement of the first friction plate 103 relative to the first sliding block 101 under the friction force of the brake disc 201.

In an embodiment, the fastener 111 is provided with a first V-shaped notch 1111 toward the displacement part 113, and the displacement part 113 is provided with a second V-shaped notch 1131 toward the fastener 111. Along the axial direction of the screw rod 106, the first V-shaped notch 1111 and the second V-shaped notch 1131 are arranged in alignment, and the slopes that are of the fastener 111 and the displacement part 113 and that cooperate with each other are two end surfaces that are parallel to each other in the first V-shaped notch 1111 and the second V-shaped notch 1131. It may be understood that, when the displacement part 113 is synchronously displaced with the first friction plate 103, the displacement part 113 drives the first V-shaped notch 1111 to offset relative to the second V-shaped notch 1131, and a distance between the two end surfaces that are parallel to each other is reduced, to achieve effect of reducing a distance between the displacement part 113 and the fastener 111.

The first V-shaped notch 1111 and the second V-shaped notch 1131 that are aligned with each other further form accommodating space, and the roller 112 may be accommodated in the accommodating space to implement positioning. There are two pairs of parallel end surfaces between the first V-shaped notch 1111 and the second V-shaped notch 1131. When the displacement part 113 is displaced toward any direction of the first friction plate 103, a distance between the two pairs of parallel end surfaces is reduced. Therefore, the displacement part 113 may be displaced along any side perpendicular to the two sliding blocks, so that effect of squeezing the roller 112 and increasing the braking force can be achieved.

In other words, for the first friction plate 103, a tangential force that is of the brake disc 201 and to which the first friction plate 103 is subject may extend left or right along a direction perpendicular to the two sliding blocks, without affecting effect of the braking force gain of the gain bridge 110. Such a setting enables the electro-mechanical braking system 100 in this application to be applicable to both a left wheel and a right wheel of the vehicle, and there is no need to adjust an installation direction of the electro-mechanical braking system or an internal structure of the gain bridge 110 based on a wheel direction. This facilitates vehicle assembly and improves vehicle maintainability.

For the electro-mechanical braking system 100 in this application, the fastener 111, the roller 112, and the displacement part 113 need to cooperate in groups to achieve effect of the braking force gain. However, in the direction perpendicular to the arrangement direction of the two sliding blocks (the radial direction of the screw rod 106), a plurality of groups each of which includes a fastener 111, a roller 112, and a displacement part 113 that cooperate with each other may be disposed. That is, in an embodiment, the fastener 111 is provided with at least two first V-shaped notches 1111, and the first V-shaped notches 1111 are arranged at an interval along the direction perpendicular to the arrangement direction of the two sliding blocks (the radial direction of the screw rod 106). Correspondingly, the displacement part 113 is provided with second V-shaped notches 1131 with a same quantity as the first V-shaped notches 1111, and each second V-shaped notch 1131 is aligned with one first V-shaped notch 1111 along the arrangement direction of the two sliding blocks (the axial direction of the screw rod 106). One roller 112 is disposed between the first V-shaped notch 1111 and the second V-shaped notch 1131 that are aligned with each other, that is, one group of which includes a fastener 111, a roller 112, and a displacement part 113 that cooperate with each other is formed.

The plurality of groups each of which includes a fastener 111, a roller 112, and a displacement part 113 that cooperate with each other are disposed, so that an abutting force of the gain bridge 110 on the first friction plate 103 is relatively evenly distributed, and pressure of the first friction plate 103 acting on the brake disc 201 is also relatively balanced. Therefore, a more stable braking friction force is obtained, and better effect of the braking force gain is formed.

In the structure shown in the figure, the fastener 111 may include a plurality of block parts having a first V-shaped notch 1111. The plurality of block parts are separately fastened to the first sliding block 101. The displacement part 113 may include a frame and a plurality of block parts having a second V-shaped notch 1131. The plurality of block parts of the displacement part 113 are slidably connected to the frame separately, and are aligned with block parts of the fastener 111 one by one. The fastener 111 and the displacement part 113 are separately split into a form of a combination of the plurality of block parts, and this can reduce overall processing costs of the gain bridge 110.

In an embodiment, the roller 112 may be cylindrical. An axis of the roller 112 is perpendicular to the arrangement direction of the two sliding blocks (the radial direction of the screw rod 106), and is also perpendicular to a displacement direction of the first friction plate 103 (the axial direction of the screw rod 106) relative to the first sliding block 101 in the braking process. Therefore, the axis of the cylindrical roller 112 is parallel to length directions of the first V-shaped notch 1111 and the second V-shaped notch 1131, and a contact area between the roller 112 and the first V-shaped notch 1111 and a contact area between the roller 112 and the second V-shaped notch 1131 are relatively increased, so that the roller 112 can form better abutting effect on the displacement part 113 and the fastener 111, and enable gain pressure of the gain bridge 110 acting on the first friction plate 103 to be more balanced.

On one side of the screw rod 106, based on the foregoing descriptions, rotation of the screw rod 106 may adjust the distance between the first sliding block 101 and the second sliding block 102. The braking assembly of the electro-mechanical braking system 100 in this application further includes a one-way torque limiting apparatus, and the driving apparatus is configured to drive the one-way torque limiting apparatus to drive the screw rod 106 to rotate relative to the first sliding block 101 and the second sliding block 102 along the axis of the screw rod. Specifically, the cam 107 is configured to be in transmission connection to the screw rod 106 through the one-way torque limiting apparatus.

In an embodiment, the one-way torque limiting apparatus includes a torque limiter 120 and a one-way clutch 130. The driving apparatus is configured to be in transmission connection to the screw rod 106 sequentially through the torque limiter 120 and the one-way clutch 130. The torque limiter 120 is configured to rotate forward or backward along an axis of the torque limiter 120, the one-way clutch 130 is configured to drive the screw rod 106 to rotate forward with the torque limiter 120, and the one-way clutch 130 is further configured to limit the screw rod 106 from rotating backward with the torque limiter 120.

Specifically, the torque limiter 120 is in transmission connection between the cam 107 and the screw rod 106. When the cam 107 rotates relative to the first sliding block 101, the torque limiter 120 may drive the screw rod 106 to synchronously rotate relative to the first sliding block 101. In this case, the thread end 1062 of the screw rod 106 rotates relative to the second sliding block 102, to adjust to the distance between the first sliding block 101 and the second sliding block 102.

In an embodiment, the torque limiter 120 is coaxially transmitted with the cam 107. The torque limiter 120 may be a double-ratchet type torque limiter, a ball-ratchet type torque limiter, or a friction torque limiter. FIG. 9 shows a working principle of the ball-ratchet type torque limiter. The torque limiter 120 shown in FIG. 9 specifically includes a driving part 121 and a driven part 122. The driving part 121 and the cam 107 are coaxially transmitted, and the driven part 122 is in transmission connection to the screw rod 106.

The driving part 121 is sleeved on a periphery of the driven part 122, an inner circumferential surface of the driving part 121 is provided with a ratchet structure in an annular arrangement, a via hole 1221 is provided in the driven part 122, and the via hole 1221 extends toward the driving part 121 along a radial direction of the driven part 122. A plurality of via holes 1221 are arranged along a circumferential direction of the driven part 122.

Springs 1222 and balls 1223 that all cooperate in a one-to-one manner are provided inside the via holes 1221. Along the radial direction of the driven part 122, the spring 1222 is closer to a rotation center of the driven part 122 than the ball 1223, and the ball 1223 is closer to the ratchet structure on the inner circumferential surface of the driving part 121. The spring 1222 is configured to push the ball 1223 to slide toward the ratchet structure on the inner circumferential surface of the driving part 121.

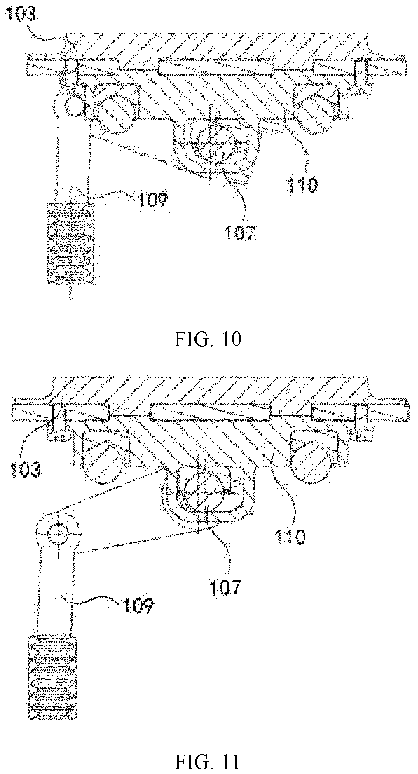

Refer to FIG. 10 together. When the electro-mechanical braking system 100 starts braking, the cam 107 rotates relative to the first sliding block 101, and pushes the first friction plate 103 to slide toward the brake disc 201. Before the first friction plate 103 is in contact with the brake disc 201, the driving part 121 of the torque limiter 120 may synchronously rotate with the cam 107. In this case, because the first friction plate 103 is not in contact with the brake disc 201, a torque borne by the cam 107 is relatively small. In a process in which the driving part 121 rotates with the cam 107, the spring 1222 may abut against the ball 1223 and be in contact with the ratchet structure on the inner circumferential surface of the driving part 121. The driving part 121 pushes, by using the ratchet structure on the inner circumferential surface, the ball 1223 to synchronously rotate, and drives the driven part 122 to synchronously rotate with the driving part 121.

Refer to FIG. 11 together. After the cam 107 rotates to a preset angle, the first friction plate 103 is in contact with the brake disc 201. Then, if the cam 107 further rotates, pressure between the first friction plate 103 and the brake disc 201 is to be increased. The pressure causes a relative increase in the torque borne by the cam 107, and the driving part 121 is synchronously increased with the rotation torque of the cam 107. In this case, an elastic force provided by the spring 1222 no longer supports the ball 1223 to rotate with a ratchet mechanism on the inner circumferential surface of the driving part 121, the ball 1223 starts to slip with a ratchet on the inner circumferential surface of the driving part 121, the driving part 121 and the driven part 122 no longer form synchronous rotation cooperation, the cam 107 continues to rotate relative to the first sliding block 101 to implement braking, and the screw rod 106 is in a relatively static state relative to the second sliding block 102.

That is, the torque limiter 120 is configured to: in the braking process of the electro-mechanical braking system 100, based on different torques borne by the cam 107, implement transmission between the cam 107 and the screw rod 106, or implement sliding decoupling between the cam 107 and the screw rod 106. When the cam 107 is in transmission connection to the screw rod 106 through the torque limiter 120, the screw rod 106 may rotate relative to the second sliding block 102 when driven by the cam 107, and adjust the distance between the first sliding block 101 and the second sliding block 102.

It may be understood that, the first friction plate 103 and the second friction plate 104 separately form wear with the brake disc 201 in a long-term working process. The first friction plate 103 and the second friction plate 104 that are worn out are thinner, and distances between the first friction plate 103 and the second friction plate 104 and the brake disc 201 are correspondingly increased. In each braking process, strokes that the first friction plate 103 and the second friction plate 104 need to slide to be in contact with the brake disc 201 are increased, causing a braking delay of the electro-mechanical braking system 100. In addition, when the first friction plate 103 and the second friction plate 104 slide for a same distance in the braking process, contact pressure between the first friction plate 103 and the brake disc 201 and between the second friction plate 104 and the brake disc 201 is reduced, which may cause a phenomenon of an insufficient braking force.

In this application, the electro-mechanical braking system 100 drives the screw rod 106 to rotate through the cam 107, so that the distance between the first sliding block 101 and the second sliding block 102 can be adjusted, and the distance between the first friction plate 103 and the second friction plate 104 can be further adjusted. The brake disc 201 is located between the first friction plate 103 and the second friction plate 104, and the first friction plate 103 and/or the second friction plate 104 slide/slides to a distance of being in contact with the brake disc 201 to be correspondingly adjusted, so that effect of the wear compensation can be formed for the electro-mechanical braking system 100.

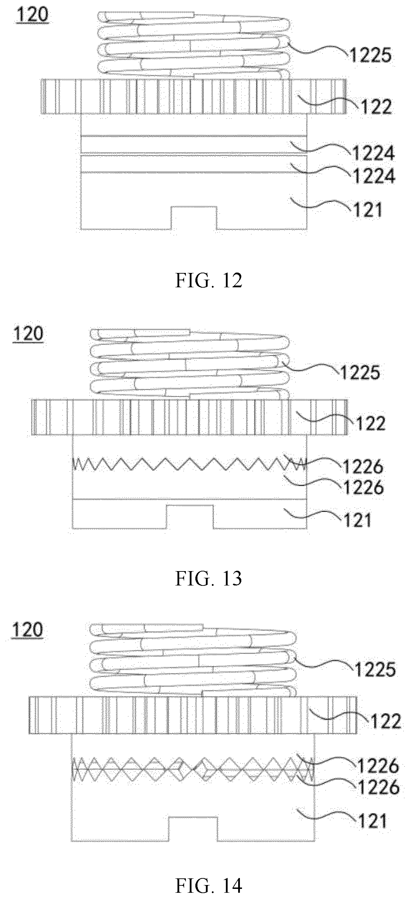

It should be pointed out that in the conventional technology, there are many structures that can implement functions of the torque limiter 120, and an implementation of the foregoing torque limiter 120 is not limited to the ball-ratchet type torque limiter shown in FIG. 9. As shown in FIG. 12, the torque limiter 120 may alternatively be a friction torque limiter. The friction torque limiter 120 cooperates with two friction wheels 1224. When the torque is small, the two friction wheels 1224 coaxially rotate through a friction force, so that the driving part 121 and the driven part 122 on two sides of the friction wheel synchronously rotate. When the torque is large, the two friction wheels 1224 start to slip, and slipping is implemented between the driving part 121 and the driven part 122. The two friction wheels 1224 may further provide a thrust of mutual abutting friction through a compression spring 1225.

FIG. 13 and FIG. 14 show working modes of the double-ratchet type torque limiter. The double-ratchet type torque limiter cooperates with two ratchets 1226 that are meshed with each other. When the torque is small, the two ratchets 1226 mesh with each other and coaxially rotate (as shown in FIG. 13), so that the driving part 121 and the driven part 122 on two sides of the ratchets 1226 synchronously rotate. When the torque is large, the two ratchets 1226 start to slip (as shown in FIG. 14), so that slipping is implemented between the driving part 121 and the driven part 122. The two ratchets 1226 may also provide a thrust of mutual abutting friction through the compression spring 1225.

An implementation of the foregoing torque limiter may also achieve effect of slipping when the rotation torque of the cam 107 exceeds a preset threshold.

The one-way clutch 130 is in transmission connection between the torque limiter 120 and the screw rod 106, the one-way clutch 130 has a one-way transmission function, and the one-way clutch 130 is configured to control a rotation direction of the screw rod 106 relative to the second sliding block 102.

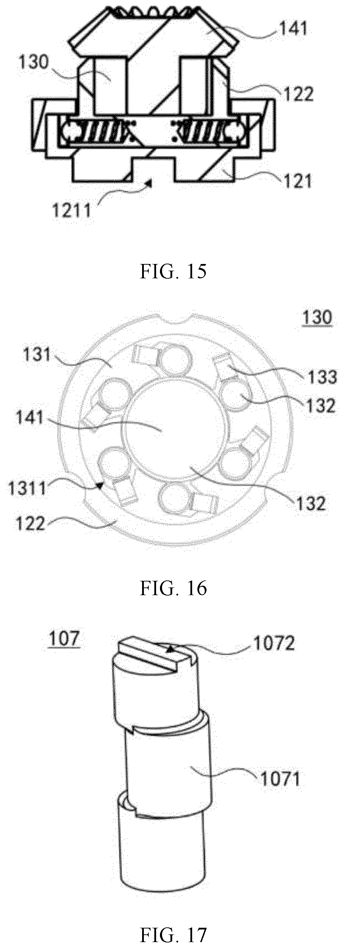

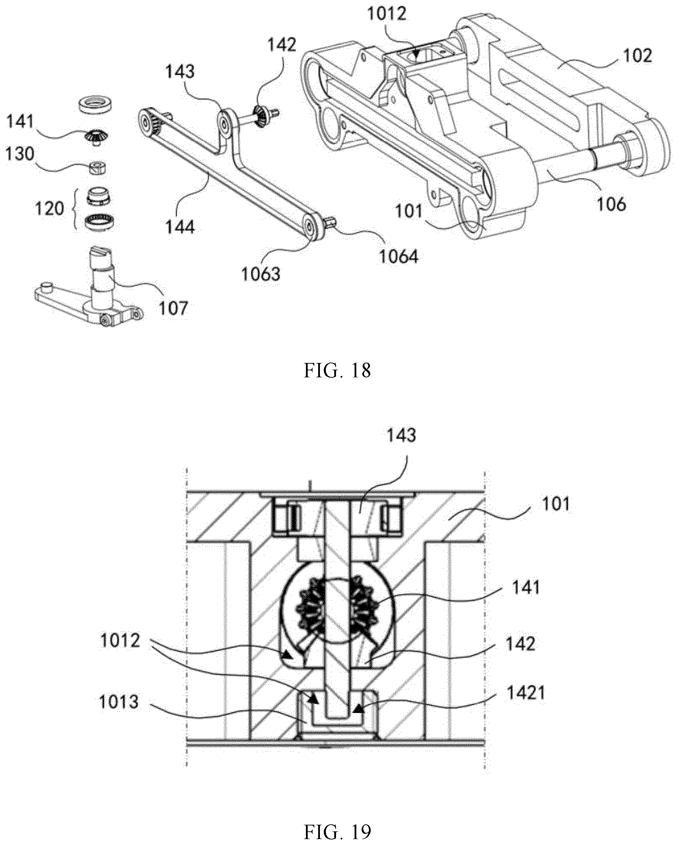

Specifically, refer to FIG. 15 together. In the diagram of FIG. 15, the one-way clutch 130 is coaxially transmitted with the driven part 122 of the torque limiter 120. In this case, the one-way clutch 130 is in transmission connection between the driven part 122 of the torque limiter 120 and the screw rod 106 (specifically, between the driven part 122 and an input gear 141 of a reversing gear assembly, as shown in FIG. 18). It may be understood that, in some other embodiments, the one-way clutch 130 may alternatively be coaxially transmitted with the driving part 121 of the torque limiter 120. In this case, the one-way clutch 130 is in transmission connection between the cam 107 and the driving part 121 to implement the function.

The one-way clutch 130 has a one-way transmission characteristic. When the cam 107 rotates and pushes the first friction plate 103, the torque limiter 120 synchronously rotates with the cam 107 and drives the one-way clutch 130 to rotate. A rotation direction of the one-way clutch 130 is the same as a rotation direction of the cam 107 and works in a transmission state, that is, the cam 107 is in transmission connection to the one-way clutch 130 and the screw rod 106 through the torque limiter 120, and the cam 107 may drive the screw rod 106 to synchronously rotate while pushing the first friction plate 103.

After the electro-mechanical braking system 100 completes braking, the first friction plate 103 slides in a direction away from the brake disc 201, and the cam 107 rotates backward. In this case, the torque limiter 120 may rotate backward with the cam 107 synchronously, the one-way clutch 130 is in a slipping state, and the transmission connection between the cam 107 and the screw rod 106 is removed.

As mentioned above, the rotation of the screw rod 106 relative to the second sliding block 102 may adjust the distance between the first sliding block 101 and the second sliding block 102, to implement the effect of the wear compensation. For the electro-mechanical braking system 100 in this application, wear of the first friction plate 103 and the second friction plate 104 is a one-way loss, that is, the distance between the first sliding block 101 and the second sliding block 102 needs to be unidirectionally reduced, to form the effect of the wear compensation.

Therefore, the introduction of the one-way clutch 130 in this embodiment may control the rotation direction between the screw rod 106 and the second sliding block 102, so that the screw rod 106 unidirectionally rotates relative to the second sliding block 102 when driven by the cam 107. In this case, the rotation of the screw rod 106 relative to the second sliding block 102 may unidirectionally reduce the distance between the first sliding block 101 and the second sliding block 102, to achieve the effect of the wear compensation. When the cam 107 rotates backward, the one-way clutch 130 slips, and the transmission state between the cam 107 and the screw rod 106 is removed. In this case, the screw rod 106 does not rotate backward relative to the second sliding block 102, to ensure that the distance between the first sliding block 101 and the second sliding block 102 is unidirectionally reduced.

The one-way clutch 130 may be a ratchet-pawl clutch or an overrunning clutch. FIG. 16 is described by using an example in which the one-way clutch is the overrunning clutch.

As shown in FIG. 16, the one-way clutch includes an annular part 131, a movable body 132, and an elastic part 133. The annular part 131 is coaxially fastened to the driven part 122 of the torque limiter 120, an outer circumferential surface of the annular part 131 may be attached to an inner circumferential surface of the driven part 122, and the movable body 132 is coaxially transmitted with the driven part 122 of the torque limiter 120. Specifically, the annular part 131 includes a plurality of grooves 1311, the grooves 1311 are arranged along a circumferential direction of the annular part 131, and an opening of each groove 1311 faces an inner circumferential surface of the annular part 131. Each groove 1311 has a different groove bottom depth. Along the circumferential direction of the annular part 131, a deep groove bottom of each groove 1311 is located on a same side of the groove 1311, and a shallow groove bottom of each groove 1311 is located on the other side of the groove 1311.

The movable body 132 and the elastic part 133 are disposed in a pairwise manner in the groove 1311 of the annular part 131. Along a radial direction of the annular part 131, a diameter dimension of the movable body 132 is greater than a depth of a shallow groove bottom of the groove 1311, and is less than a depth of a deep groove bottom of the groove 1311. Each elastic part 133 is located on a side of the deep groove bottom of the groove 1311 relative to a corresponding movable body 132. The elastic part 133 is configured to push the movable body 132 to move toward the side of the shallow groove bottom of the groove 1311.

When the driven part 122 of the torque limiter 120 extends into the inner circumferential surface of the annular part 131, the driving part 121 rotates in a direction from a side of a deep groove bottom to a side of a shallow groove bottom of each groove 1311 (where the rotation direction is defined as a forward rotation direction in this embodiment), and drives each movable body 132 to rotate a direction toward the side of the shallow groove bottom of the groove 1311. The driven part 122 rubs with each movable body 132, and the movable body 132 continuously abuts against a side wall of the groove 1311 under the action of the friction force, and pushes the driven part 122 and the driving part 121 to synchronously rotate forward.

When the annular part 131 rotates forward (which may be understood as that the one-way clutch 130 rotates forward), the outer circumferential surface of the annular part 131 rubs an inner circumferential surface of an inner hole of the driving part 121 (or in a form of a spline, a transmission pin, or the like), and the annular part 131 drives the driven part 122 to synchronously rotate forward. The screw rod 106 can synchronously rotate and reduce the distance between the first sliding block 101 and the second sliding block 102.

When the one-way clutch 130 shown in FIG. 16 rotates backward (where in this embodiment, the backward rotation means that the annular part 131 rotates in a direction from a side of a shallow groove bottom to a side of a shallow groove bottom of each groove 1311), each movable body 132 is driven to rotate in a direction toward the side of the deep groove bottom of the groove 1311. A friction force between each movable body 132 and the driven part 122 is reduced, and the movable body 132 compresses the elastic part 133 under the action of the friction force, and releases friction cooperation between the movable body 132 and the driven part 122, so that the driven part 122 slips with each movable body 132, and enables the one-way clutch 130 to slip as a whole, and the transmission connection between the torque limiter 120 and the screw rod 106 is removed.

The driven part 122 does not rotate with the driving part 121 when the driving part 121 rotates backward, the screw rod 106 is static relative to the second sliding block 102, and the distance between the first sliding block 101 and the second sliding block 102 remains unchanged.

Therefore, by controlling the rotation direction of the one-way clutch 130, the one-way clutch 130 may work in a transmission state or a slipping state. The one-way clutch 130 works in a forward rotation state, the one-way clutch 130 rotates forward and drives the screw rod 106 to rotate, and the distance between the first sliding block 101 and the second sliding block 102 is reduced, thereby forming the effect of the wear compensation. The one-way clutch 130 works in the slipping state, and the screw rod 106 and the one-way clutch 130 slip. The one-way clutch 130 is disposed to form one-way feed effect.

In this application, the electro-mechanical braking system 100 can achieve effect of the braking force gain in the braking process by disposing the structure of the gain bridge 110, and can achieve the effect of the wear compensation in a long-term working process of the electro-mechanical braking system 100 by disposing the structure of the one-way torque limiting apparatus. Reliability of the electro-mechanical braking system 100 in this application is improved from two different aspects.

Both the braking force gain and a power source of the wear compensation are from a rotation action of the cam 107 relative to the first sliding block 101. Because the gain bridge 110 is slidably connected to the first sliding block 101, rotation of the cam 107 relative to the first sliding block 101 may always maintain gain effect of the gain bridge 110, that is, the braking force gain in the electro-mechanical braking system 100 in this application runs through an entire service life of the gain bridge 110. In some working scenarios, when the electro-mechanical braking system 100 is stuck or the like inside, the braking force gain provided by the gain bridge 110 can ensure that the electro-mechanical braking system 100 provides the reliable braking force, and ensure vehicle safety.

The screw rod 106 is in transmission connection to the cam 107 through the one-way torque limiting apparatus. After the torque of the cam 107 increases, the torque limiter 120 may remove the transmission connection between the screw rod 106 and the cam 107. The one-way clutch 130 is configured to control one-way feed of the screw rod 106 relative to the second sliding block 102. The effect of the wear compensation in the electro-mechanical braking system 100 in this application is implemented based on the torque to which the cam 107 is subject. In some working scenarios, when the first friction plate 103 and the second friction plate 104 are worn out, the one-way torque limiting apparatus may compensate for the wear by cooperating with a mechanism action of the screw rod 106. The torque limiter 120 is configured to implement decoupling between the cam 107 and the wear compensation mechanism.

In the conventional technology, the braking force gain and the wear effect in the braking system are implemented by using a same mechanism. Because the braking force gain and the wear compensation need to be implemented simultaneously, the structure of the mechanism is complex. This is not conducive to processing and manufacturing costs are high. In addition, in the braking process, the braking force gain and the effect of the wear compensation are not ideal because of mutual influence between mechanism actions. In this application, the braking force gain and the wear compensation of the electro-mechanical braking system 100 are decoupled through the one-way torque limiting apparatus, so that the structure is simple and is easy to process, and reliability is high. In addition, in this application, the electro-mechanical braking system 100 also separately improves reliability from two aspects through the braking force gain and the wear compensation, to adapt to more working scenarios, and ensure that the electro-mechanical braking system 100 can effectively provide the braking force within the service life.

As mentioned above, coaxial transmission is performed between the torque limiter 120 and the cam 107. In an embodiment, coaxial transmission may be implemented between the torque limiter 120 and the cam 107 through a groove and a convex strip that cooperate with each other. Specifically, refer back to FIG. 15, and refer to FIG. 17 together. In this embodiment, the driving part 121 of the torque limiter 120 is provided with a groove 1211, and the cam 107 is provided with a convex strip 1072. Along the rotation axis of the cam 107, an opening direction of the groove 1211 faces the cam 107, and an extension direction of the convex strip 1072 faces the driving part 121. The convex strip 1072 is embedded in the groove 1211. Coaxial transmission is implemented between the driving part 121 and the cam 107 through cooperation between the groove 1211 and the convex strip 1072.

It may be understood that, in some embodiments, a structure similar to the convex strip 1072 may also be disposed on the driving part 121 in cooperation with a structure, similar to the groove 1211, that is disposed on the cam 107. The driving part 121 and the cam 107 may also cooperate with each other to implement coaxial transmission between the driving part 121 and the cam 107.

In an embodiment, a gap is further reserved along the circumferential direction between the driving part 121 of the torque limiter 120 and the cam 107, and the gap along the circumferential direction is used to adjust start time of synchronous rotation of the torque limiter 120 with the cam 107. Specifically, a width dimension of the groove 1211 of the driving part 121 along the circumferential direction is greater than a width dimension of the convex strip 1072 of the cam 107 along the circumferential direction, to form the gap between the groove 1211 and the convex strip 1072 along the circumferential direction. When the cam 107 starts to rotate and push the first friction plate 103, a side wall of the convex strip 1072 has not been in contact with a side wall of the groove 1211. After the cam 107 may separately rotate by a specific angle, the convex strip 1072 is in contact with the groove 1211, and then the cam 107 drives the driving part 121 to rotate.

The specific angle may be obtained by presetting, to be specific, a width dimension of each of the convex strip 1072 and the groove 1211 is set, to control the gap between the convex strip 1072 and the groove 1211 along the circumferential direction, to obtain the specific angle. In this embodiment of this application, an angle at which the cam 107 rotates separately is defined as a preset angle $\theta_0$.

The preset angle $\theta_0$ is set, so that an occasion on which the torque limiter 120 starts to synchronously rotate with the cam 107 can be controlled. By setting the preset angle $\theta_0$, it can be avoided that in a process in which the cam 107 rotates and pushes the first friction plate 103 each time, the screw rod 106 is driven to rotate relative to the second sliding block 102, and is adjusted to the distance between the first sliding block 101 and the second sliding block 102. Because wear of the electro-mechanical braking system 100 is formed by accumulation after long-term working, by setting the preset angle $\theta_0$, the screw rod 106 can be controlled to rotate relative to the second sliding block 102 only after the cam 107 pushes the first friction plate 103 to slide for a specific distance, and the first friction plate 103 or the second friction plate 104 has not been in contact with the brake disc 201 for the gap exists between the first friction plate 103 or the second friction plate 104 and the brake disc 201, to compensate for the gap formed by the wear.

In other words, in this embodiment of this application, a sliding distance of the first friction plate 103 and/or the second friction plate 104 when the cam 107 separately rotates relative to the torque limiter 120 can be controlled by setting the preset angle $\theta_0$. The sliding distance can be set corresponding to the distance between the first friction plate 103 and/or the second friction plate 104 and the brake disc 201. That is, after the cam 107 rotates by the preset angle $\theta_0$, the first friction plate 103 and/or the second friction plate 104 are/is in contact with the brake disc 201. If the first friction plate 103 and/or the second friction plate 104 are/is not worn out in this case, the torque increases when the cam 107 further rotates, the torque limiter 120 slips, and rotation of the cam 107 does not drive the screw rod 106 to rotate relative to the second sliding block 102.

After the cam 107 rotates by the preset angle $\theta_0$, if the first friction plate 103 and/or the second friction plate 104 are/is worn out, the torque is small when the cam 107 further rotates, and transmission is formed between the convex strip 1072 and the groove 1211. The rotation of the cam 107 drives, through the torque limiter 120, the screw rod 106 to rotate relative to the second sliding block 102, to form the effect of the wear compensation of the electro-mechanical braking system 100.

Therefore, by setting the gap (the preset angle $\theta_0$) between the cam 107 and the torque limiter 120 along the circumferential direction, an occasion for starting the wear compensation of the electro-mechanical braking system 100 can be adjusted. In an embodiment, a maximum rotation angle of the cam 107 in the braking process is defined as $\theta_{max}$, and a ratio of a preset rotation angle $\theta_0$ of the cam 107 relative to the driving part 121 to the maximum rotation angle $\theta_{max}$ of the cam 107 in the braking process meets the following condition: $1{:}25 \leq \theta_0{:}\theta_{max} \leq 1{:}5$. The cam 107 is disposed to meet the torque limiter 120 and rotate separately within the angle range, so that it can be ensured that the first friction plate 103 and/or the second friction plate 104 are/is in contact with the brake disc 201 after sliding for a sufficient distance, and it can be ensured that the screw rod 106 rotates at a sufficient angle relative to the second sliding block 102 when the wear compensation is performed, to adjust the distance between the first sliding block 101 and the second sliding block 102.

Refer back to FIG. 3 and FIG. 4. In an embodiment, the electro-mechanical braking system 100 includes two screw rods 106, the two screw rods 106 are arranged at an interval along a radial direction of the electro-mechanical braking system 100, the two screw rods 106 are located on two sides of the gain bridge 110 along a direction perpendicular to an arrangement direction of the two sliding blocks, and the driving apparatus drives the two screw rods 106 to synchronously rotate through the one-way torque limiting apparatus. Specifically, the cam 107 is separately in transmission connection to the two screw rods 106 through the torque limiter 120. The two screw rods 106 synchronously rotate, to synchronously adjust to the distance between the first sliding block 101 and the second sliding block 102, so that relative sliding between the first sliding block 101 and the second sliding block 102 is more stable, and the braking assembly also slides more smoothly relative to the clamp holder 105.

Further, the two screw rods 106 are respectively arranged on two sides of the gain bridge 110, so that it can be ensured that mechanism actions between the braking force gain and the wear compensation in the electro-mechanical braking system 100 in this application do not interfere with each other.

In an embodiment, the driving apparatus of the electro-mechanical braking system 100 includes a reversing gear assembly, a belt pulley 143, and a transmission belt 144. The reversing gear assembly, the belt pulley 143, and the transmission belt 144 are sequentially in transmission connection between the cam 107 and the screw rod 106. Specifically, refer to FIG. 18. The reversing gear assembly includes an input gear 141 and an output gear 142, where the input gear 141 and the driven part 122 of the torque limiter 120 are coaxially transmitted. In addition, in some embodiments, the input gear 141 may be further coaxially transmitted with the one-way clutch 130. The output gear 142 is coaxially transmitted with the belt pulley 143. The belt pulley 143 is in transmission connection to the screw rod 106 through the transmission belt 144.

Therefore, the cam 107 is in transmission connection to the screw rod 106 through the torque limiter 120, the one-way clutch 130, the reversing gear assembly, the belt pulley 143, and the transmission belt 144. The torque limiter 120 is configured to slip when the torque of the cam 107 exceeds a preset threshold, and the one-way clutch 130 is configured to implement a unidirectional transmission function between the cam 107 and the screw rod 106.

In an embodiment, the rotation axis of the cam 107 is approximately perpendicular to the arrangement direction of the two sliding blocks, and the axial direction of the screw rod 106 is approximately parallel to the arrangement direction of the two sliding blocks. The rotation axis of the cam 107 intersects the axial direction of the screw rod 106, and in some embodiments, the rotation axis of the cam 107 is perpendicular to the axial direction of the screw rod 106. The reversing gear assembly 140 is configured to change the rotation direction of transmission between the cam 107 and the screw rod 106.

Specifically, the input gear 141 and the output gear 142 of the reversing gear assembly are respectively tapered gears. Cooperation of the input gear 141 and the output gear 142 may deflect the rotation axis of the cam 107 to be parallel to the screw rod 106. In this way, a reversing function of the rotation motion is implemented, and it is ensured that the rotation of the cam 107 can drive the screw rod 106 to rotate.

In a manner in which the belt pulley 143 cooperates with the transmission belt 144 for transmission, when a shaft spacing between the belt pulley 143 and the screw rod 106 is long, it can be ensured that the belt pulley 143 and the screw rod 106 reliably rotate synchronously. In correspondence to a scenario in which there are two screw rods 106, the belt pulley 143 may further reliably drive, through the transmission belt 144, the two screw rods 106 to synchronously rotate, to ensure that the two screw rods 106 are synchronously adjusted to the distance between the first sliding block 101 and the second sliding block 102.

On the other hand, a volume of the transmission belt 144 is small. When a shaft spacing between the belt pulley 143 and the screw rod 106 is long, the transmission belt 144 may relatively compress internal space of the electro-mechanical braking system 100 while achieving the transmission function. It may be understood that, in some other embodiments, the reversing gear assembly may alternatively implement the transmission connection between the cam 107 and the screw rod 106 in a manner such as chain transmission, rack transmission, gear assembly transmission, or connecting rod transmission.

In an embodiment, a tensioner 145 is further disposed on a motion path of the transmission belt 144 (refer to FIG. 3 together). The tensioner 145 is configured to adjust the motion path of the transmission belt 144, to control a volume occupied by the transmission belt 144 in the electro-mechanical braking system 100. In addition, the tensioner 145 is further configured to adjust a tensioning force of the transmission belt 144, so that the transmission belt 144 can form reliable pressure with the screw rod 106, and drive the screw rod 106 to rotate through friction.

On one side of the screw rod 106, as shown in FIG. 18, a friction section 1063 may be disposed in the screw rod 106. Surface roughness of the friction section 1063 is high, and the transmission belt 144 is sleeved on an outer circumferential surface of the friction section 1063, to improve a friction force between the transmission belt 144 and the screw rod 106, and ensure synchronous transmission. Further, the friction section 1063 of the screw rod 106 may be further disposed at an end part, and the friction section 1063 and a main body part of the screw rod 106 are of a split structure. The split friction section 1063 may be separately processed, to reduce overall processing difficulty of the screw rod 106 and save costs. The friction section 1063 may be axially transmitted with the main body part of the screw rod 106 in a manner such as a core shaft (which is illustrated as a core shaft 1064 in FIG. 18), to convert a driving force of the transmission belt 144 into rotation motion of the screw rod 106. A cross-sectional shape of the core shaft 1064 may be a rectangle, a hexagon, or the like.

On the other hand, when the reversing gear assembly is transmitted to the screw rod 106 through chain transmission, rack transmission, gear assembly transmission, or connecting rod transmission, a structure of a meshed section may be disposed in the screw rod 106. The structure of the meshed section is similar to that of the friction section 1063, and is configured to implement transmission connection between the screw rod 106 and a transmission chain, a transmission rack, and a transmission gear. Alternatively, the meshed section may be disposed at the end part of the screw rod 106, or the meshed section and the main body part of the screw rod 106 are of a split structure, without affecting implementation of the solution of this application.

In an embodiment, the first sliding block 101 is further provided with an accommodating cavity 1012, and the accommodating cavity 1012 is located between the two screw rods 106 and is configured to accommodate the reversing gear assembly. Specifically, refer to FIG. 19 together. The accommodating cavity 1012 of the first sliding block 101 is at least configured to accommodate the reversing gear assembly, and the accommodating cavity 1012 is further provided with a cover plate 1013. The cover plate 1013 is configured to shield an opening of the accommodating cavity 1012. The reversing gear assembly may be installed in the first sliding block 101 through the opening of the accommodating cavity 1012. The cover plate 1013 is configured to implement sealing protection for the reversing gear assembly.

In this embodiment, along an axial direction of the output gear 142 of the reversing gear assembly, the cover plate 1013 is located on a side that is of the output gear 142 of the reversing gear assembly and that is away from the belt pulley 143. A gear shaft of the output gear 142 of the reversing gear assembly includes an extension section 1421, and the extension section 1421 extends toward a direction of the cover plate 1013. On a cross section perpendicular to the extension section 1421, a shape of the extension section 1421 is a rectangle or a hexagon.

Therefore, in an assembly or maintenance process of the electro-mechanical braking system 100 in this application, the output gear 142 of the reversing gear assembly may be exposed by opening the cover plate 1013. Because the extension section 1421 is disposed in the direction of the output gear 142 toward the cover plate 1013, and a cross-sectional shape of the extension section 1421 is a rectangle or a hexagon, the output gear 142 may be rotated through a tool such as a wrench or a sleeve, and further the screw rod 106 is driven to rotate relative to the second sliding block 102 through the belt pulley 143 and the transmission belt 144.

It may be understood that the screw rod 106 is manually adjusted to rotate relative to the second sliding block 102, and the distance between the second sliding block 102 and the first sliding block 101 may also be adjusted. That is, based on the solution in the foregoing embodiment, the electro-mechanical braking system 100 in this application further has a function of manually implementing the wear compensation, and therefore improves assembly and maintainability of the electro-mechanical braking system 100.

It should be proposed that, in the diagram of FIG. 19, the gear shaft of the output gear 142 and the output gear 142 are of a split structure, and the gear shaft of the output gear 142 further passes through a body of the output gear 142 and is fastened to the belt pulley 143, to implement coaxial transmission between the output gear 142 and the belt pulley 143. A split structure of the body of the output gear 142 and the gear shaft does not affect function implementation of the extension section 1421, and the output gear 142 and the belt pulley 143 are synchronously connected through the gear shaft. This reduces a quantity of parts of the electro-mechanical braking system 100, and further helps compress a space volume of the electro-mechanical braking system 100.

In an embodiment, the driving apparatus of the electro-mechanical braking system 100 includes a brake motor 108 and a transmission mechanism 109, the transmission mechanism 109 is in transmission connection between the brake motor 108 and the cam 107, and the electro-mechanical braking system 100 provides a driving force through the brake motor 108, to drive the cam 107 to rotate relative to the first sliding block 101.

Specifically, refer to FIG. 2 and FIG. 3 together. In an embodiment, the brake motor 108 is fastened to the first sliding block 101, and is located on a side that is of the first sliding block 101 and that is away from the first friction plate 103. An axial direction of a motor shaft of the brake motor 108 intersects with the axial direction of the screw rod 106. In the diagram of the figure, the motor shaft of the brake motor 108 may be further disposed along a direction perpendicular to the axial direction of the screw rod 106, and therefore a dimension of the electro-mechanical braking system 100 along the axial direction of the screw rod 106 is reduced, and wheel end space is saved. The brake motor 108 drives, through the motor shaft, the transmission mechanism 109 to move, and drives the cam 107 to rotate.

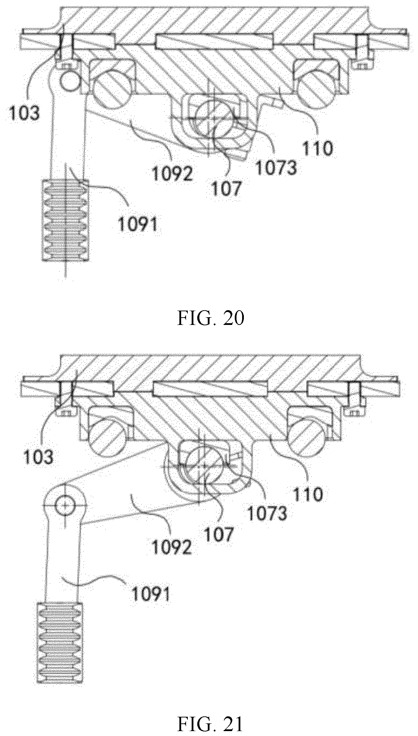

Refer to FIG. 20 together. The transmission mechanism 109 includes an input part 1091 and an output part 1092. One end of the input part 1091 is in transmission connection to the motor shaft of the brake motor 108, and the other end of the input part 1091 is rotatably connected to one end of the output part 1092. The other end of the output part 1092 is rotatably connected to the cam 107.

In the diagram of FIG. 20, one end that is of the input part 1091 and that is in cooperation with the motor shaft is disposed as a rack structure. Drive teeth are disposed at the end part of the motor shaft. When the motor shaft rotates, the drive teeth are meshed with racks, to drive the input part 1091 to slide. A sliding direction of the input part 1091 may be parallel to the axial direction of the screw rod 106. In this case, because two opposite ends of the output part 1092 are rotatably connected to the input part 1091 and the cam 107 respectively, after the motor shaft of the brake motor 108 drives the input part 1091 to slide, the motor shaft of the brake motor 108 may drive the cam 107 to rotate through the output part 1092 (as shown in FIG. 21), and enable the eccentric part 1071 of the cam 107 to abut against the gain bridge 110, to drive the first friction plate 103 to slide toward the brake disc 201.

A sliding part 1073 may be further disposed at the eccentric part 1071 of the cam 107. The sliding part 1073 is located between the eccentric part 1071 and the gain bridge 110, so that a contact area of the cam 107 acting on the gain bridge 110 can be increased, and the cam 107 pushes the gain bridge 110 more smoothly.

On the other hand, a structure of a reducer 1093 may be further disposed between the transmission mechanism 109 and the brake motor 108. The reducer 1093 is in transmission connection between the motor shaft of the brake motor 108 and the input part 1091. The reducer 1093 is configured to adjust a torque and a rotational speed that are output by the motor shaft, to match transmission effect between the brake motor 108 and the cam 107.

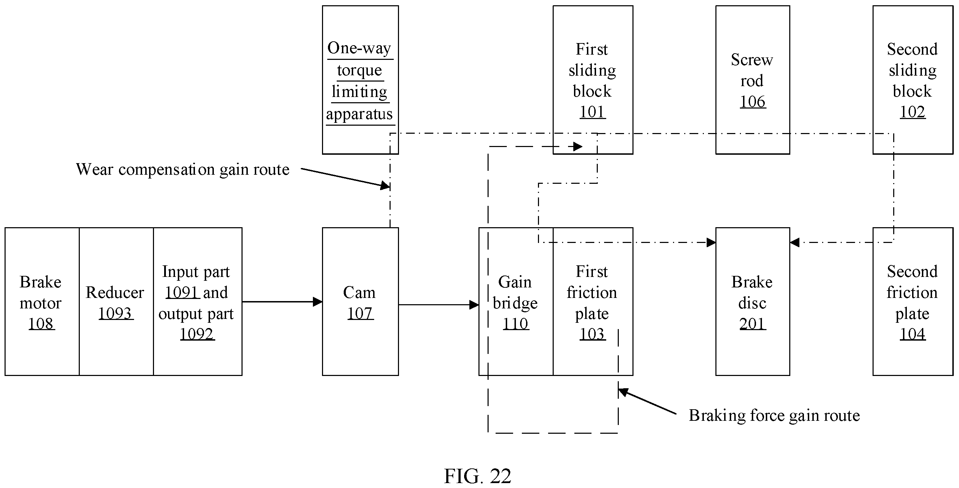

FIG. 22 shows a transmission path of the electro-mechanical braking system 100 according to an embodiment of this application. As shown in FIG. 22, the electro-mechanical braking system 100 in this application outputs power through the brake motor 108, and drives the cam 107 to rotate through power transfer of the transmission mechanism 109 (the reducer 1093, the input part 1091, and the output part 1092). The rotation of the cam 107 forms power of the wear compensation and the braking force gain through the one-way torque limiting apparatus and the gain bridge 110 separately. The power of the wear compensation of the one-way torque limiting apparatus may act on the first sliding block 101, the screw rod 106, and the second sliding block 102. The one-way torque limiting apparatus is transmitted by the internal mechanism of the electro-mechanical braking system 100, and drives the screw rod 106 to rotate relative to the first sliding block 101 and the second sliding block 102, to achieve the effect of the wear compensation.

The power of the braking force gain of the gain bridge 110 acts on the first friction plate 103 and the second friction plate 104, to drive the first friction plate 103 and the second friction plate 104 to slide relative to each other, and be in contact with the brake disc 201 from two sides of the brake disc 201 to form friction braking. The gain bridge 110 is configured to increase pressure of the first friction plate 103 and/or the second friction plate 104 acting on the brake disc 201, to improve the braking force of the electro-mechanical braking system 100.

In this application, because the one-way torque limiting apparatus is disposed in the electro-mechanical braking system 100, the power output for rotation of the cam 107 separately implements the effect of the braking force gain and the effect of the wear compensation through two different mechanism transmission routes. In addition, the one-way torque limiting apparatus may form slipping based on the torque borne by the cam 107 in the process of rotating the cam 107, to implement decoupling between the braking force gain and the wear compensation. The internal structure of the electro-mechanical braking system 100 is simple, and reliability is high. The vehicle provided in this application also improves reliability in the braking process.

It is clear that a person skilled in the art can make various modifications and variations to this application without departing from the scope of this application. In this way, this application is intended to cover these modifications and variations of this application provided that they fall within the scope of protection defined by the following claims and their equivalent technologies.

**Claims**

1. An electro-mechanical braking system, wherein the electro-mechanical braking system comprises:

   a clamp body, wherein the clamp body comprises two sliding blocks, a screw rod, and a gain bridge, one of the sliding blocks is configured to be movably connected to one friction plate and the gain bridge, the gain bridge is configured to drive the friction plate, the other sliding block is configured to be in transmission connection to the sliding block and the other friction plate through the screw rod, and the screw rod is configured to be in threaded connection to the other sliding block; and
   a driving apparatus, wherein the driving apparatus is configured to drive the gain bridge and the sliding block and is configured to drive, through a one-way torque limiting apparatus, the screw rod to rotate along an axis of the screw rod relative to the two sliding blocks.

2. The electro-mechanical braking system according to claim 1, wherein the driving apparatus comprises a cam, the cam is configured to abut against and be arranged between the gain bridge and the sliding block, and the cam is configured to be in transmission connection to the screw rod through the one-way torque limiting apparatus.

3. The electro-mechanical braking system according to claim 2, wherein the one-way torque limiting apparatus comprises a one-way clutch and a torque limiter, and the driving apparatus is configured to be in transmission connection to the screw rod sequentially through the torque limiter and the one-way clutch, wherein

   the torque limiter is configured to rotate forward or backward along an axis of the torque limiter; and
   the one-way clutch is configured to drive the screw rod to rotate forward with the torque limiter and is configured to limit the screw rod from rotating backward with the torque limiter

4. The electro-mechanical braking system according to claim 3, wherein the torque limiter comprises a driving part and a driven part that are coaxially transmitted, the driven part is coaxially fastened to the one-way clutch, and the driving part is coaxially transmitted with the cam, wherein along an axial direction of the cam, a convex strip and a groove that cooperate with each other are provided between the driving part and the cam, and the convex strip is embedded in the groove to implement coaxial transmission between the cam and the driving part.

5. The electro-mechanical braking system according to claim 4, wherein along a circumferential direction of the cam, a width dimension of the groove is greater than a width dimension of the convex strip; and after the cam rotates by a preset angle relative to the driving part, the convex strip and the groove are in contact with each other and coaxially rotate, wherein a ratio of the preset angle $\theta_0$ at which the cam rotates relative to the driving part to a maximum rotation angle $\theta_{max}$ of the cam in a braking process meets the following condition:

$$1{:}25{\leq}\theta_0{:}\theta_{max}{\leq}1{:}5$$

6. The electro-mechanical braking system according to any one of claims 2 to 5, wherein the electro-mechanical braking system comprises two screw rods, the two screw rods are arranged at an interval along radial directions of the two screw rods, and are located on two sides of the gain bridge, and the driving apparatus drives the two screw rods to synchronously rotate through the one-way torque limiting apparatus.

7. The electro-mechanical braking system according to claim 6, wherein a rotation axis of the cam intersects an axial direction of the screw rod, and the driving apparatus comprises a reversing gear assembly, a belt pulley, and a transmission belt, wherein

an input gear of the reversing gear assembly is coaxially transmitted with the torque limiter; and an axis of an output gear of the reversing gear assembly is parallel to the axial direction of the screw rod, the output gear of the reversing gear assembly is coaxially transmitted with the belt pulley, and the belt pulley drives, through the transmission belt, the two screw rods to synchronously rotate.

8. The electro-mechanical braking system according to claim 7, wherein the sliding block is provided with an accommodating cavity, the accommodating cavity is located between the two screw rods and is configured to accommodate at least the reversing gear assembly, and the sliding block further comprises a cover plate for shielding an opening of the accommodating cavity, wherein

along an axial direction of the output gear of the reversing gear assembly, the cover plate is located on a side that is of the output gear of the reversing gear assembly and that is away from the belt pulley; and a gear shaft of the output gear of the reversing gear assembly comprises an extension section, the extension section extends toward the cover plate, and a cross-sectional shape of the extension section is a hexagon.

9. The electro-mechanical braking system according to any one of claims 2 to 8, wherein the sliding block is provided with an accommodating groove, the cam and the gain bridge are located in the accommodating groove, the cam and the friction plate are respectively arranged on the two sides of the gain bridge along the axial direction of the screw rod, and the cam is configured to rotate and abut against the gain bridge and slide in the accommodating groove to push the friction plate.

10. The electro-mechanical braking system according to claim 9, wherein along the axial direction of the screw rod, the gain bridge comprises a fastener, a roller, and a displacement part that are sequentially arranged, the fastener is configured to abut against the cam, the displacement part is fastened to the friction plate, and the roller is located between the fastener and the displacement part, wherein
along the radial direction of the screw rod, the friction plate may be displaced relative to the sliding block in the braking process, the displacement part is synchronously displaced with the friction plate and reduces a distance between the displacement part and the fastener, and the roller abuts between the fastener and the displacement part to increase a braking force.

11. The electro-mechanical braking system according to claim 9 or 10, wherein the fastener is provided with a first V-shaped notch toward the displacement part, the displacement part is provided with a second V-shaped notch toward the fastener, and the first V-shaped notch is aligned with the second V-shaped notch along the axial direction of the screw rod; and when the displacement part is synchronously displaced with the friction plate, the displacement part drives the first V-shaped notch to offset relative to the second V-shaped notch to reduce the distance between the displacement part and the fastener.

12. The electro-mechanical braking system according to claim 11, wherein the fastener is provided with at least two first V-shaped notches, and the at least two first V-shaped notches are arranged at an interval along the radial direction of the screw rod;

the displacement part is provided with second V-shaped notches with a same quantity as the first V-shaped notches, and each second V-shaped notch is aligned with one of the first V-shaped notches along the axial direction of the screw rod; and

one roller is disposed between the first V-shaped notch and the second V-shaped notch that are aligned with each other.

**13.** The electro-mechanical braking system according to any one of claims 10 to 12, wherein the roller is cylindrical, and an axis of the roller is perpendicular to the axial direction of the screw rod, and is also perpendicular to a displacement direction of the friction plate relative to the sliding block in the braking process.

**14.** The electro-mechanical braking system according to any one of claims 2 to 13, wherein the driving apparatus comprises a brake motor and a transmission mechanism, and the brake motor is fastened to the sliding block and drives, through the transmission mechanism, the cam to rotate, wherein

along the axial direction of the screw rod, the brake motor is located on one side that is of the cam and that is away from the sliding block, and a motor shaft of the brake motor is perpendicular to the axial direction of the screw rod; and an input part of the transmission mechanism is in transmission connection to the brake motor, and slides along the axial direction of the screw rod, and two opposite ends of an output part of the transmission mechanism are respectively rotatably connected to the input part of the transmission mechanism and the cam.

**15.** A vehicle, comprising a wheel and the electro-mechanical braking system according to any one of claims 1 to 14, wherein an axial direction of a screw rod in the electro-mechanical braking system is approximately parallel to a brake disc rotation shaft of the wheel.

100

201

FIG. 1

FIG. 2

FIG. 3

EP 4 527 704 A1

FIG. 4

FIG. 5

FIG. 6

FIG. 7

FIG. 8

FIG. 9

FIG. 10

FIG. 11

120

1225

122

1224
1224

121

FIG. 12

120

1225

122

1226
1226

121

FIG. 13

120

1225

122

1226
1226

121

FIG. 14

FIG. 15

FIG. 16

FIG. 17

FIG. 18

FIG. 19

FIG. 20

FIG. 21

EP 4 527 704 A1

One-way torque limiting apparatus 101

First sliding block 101

Screw rod 106

Second sliding block 102

Wear compensation gain route

Brake motor 108 | Reducer 1093 | Input part 1091 and output part 1092

Cam 107

Gain bridge 110 | First friction plate 103

Brake disc 201

Second friction plate 104

Braking force gain route

FIG. 22

Europäisches
Patentamt

European
Patent Office

Office européen
des brevets

# EUROPEAN SEARCH REPORT

Application Number

EP 24 20 2517

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 413 007 A (BYD CO LTD) 26 February 2021 (2021-02-26) | 1,15 | INV. B60T13/74 |
| A | * English Translation to figures 1-4; figures 1-4 * | 2-14 | F16D55/226 F16D65/14 |
| | ----- | | F16D65/54 |
| A | US 8 448 757 B2 (VOLLERT HERBERT [DE]; FOITZIK BERTRAM [DE] ET AL.) 28 May 2013 (2013-05-28) * column 5, line 1 - column 8, line 25; figure 1 * | 1-15 | |
| | ----- | | |
| A | US 2023/016924 A1 (GERBER KRAIG [US] ET AL) 19 January 2023 (2023-01-19) * paragraph [0047] - paragraph [0062]; figures 5-15 * | 1-15 | |
| | ----- | | |

**TECHNICAL FIELDS SEARCHED (IPC)**

F16D
B60T

The present search report has been drawn up for all claims

| Place of search | Date of completion of the search | Examiner |
|---|---|---|
| Munich | 5 February 2025 | Marsano, Flavio |

EPO FORM 1503 03.82 (P04C01)

## ANNEX TO THE EUROPEAN SEARCH REPORT
## ON EUROPEAN PATENT APPLICATION NO.

EP 24 20 2517

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2025

| Patent document cited in search report | | Publication date | Patent family member(s) | | Publication date |
|---|---|---|---|---|---|
| CN 112413007 | A | 26-02-2021 | NONE | | |
| US 8448757 | B2 | 28-05-2013 | AT | E505667 T1 | 15-04-2011 |
| | | | CN | 101868646 A | 20-10-2010 |
| | | | DE | 102007055637 A1 | 28-05-2009 |
| | | | EP | 2222977 A1 | 01-09-2010 |
| | | | KR | 20100084177 A | 23-07-2010 |
| | | | US | 2010243387 A1 | 30-09-2010 |
| | | | WO | 2009065781 A1 | 28-05-2009 |
| US 2023016924 | A1 | 19-01-2023 | DE | 102022206933 A1 | 19-01-2023 |
| | | | US | 2023016924 A1 | 19-01-2023 |

EPO FORM P0459

For more details about this annex : see Official Journal of the European Patent Office, No. 12/82